# FASCICULE DE BREVET EUROPEEN

(11) **EP 3 445 155 B1**
(45) Date de publication et mention de la délivrance du brevet: **04.12.2019**
(21) Numéro de dépôt: 17716961.2
(22) Date de dépôt: 22.03.2017
(51) Int. Cl.: A01D 69/10, A01D 34/82

(54) **TONDEUSE AGRAIRE À FREIN DE STATIONNEMENT**
MÄHER MIT FESTSTELLBREMSE
MOWER HAVING A PARKING BRAKE

(30) Priorité: 18.04.2016 FR 1653395
(43) Date de publication de la demande: 27.02.2019
(73) Titulaire: PELLENC, 84120 Pertuis (FR)
(72) Inventeur: PELLENC, Roger, 84120 PERTUIS (FR); ZARCO, Jean-José, 13610 LE PUY STE REPARADE (FR)
(74) Mandataire: Weber, Etienne Nicolas
(86) Numéro de dépôt international: PCT/FR2017/050667
(87) Numéro de publication internationale: WO 2017/182725

(56) Documents cités:
- EP-A1- 0 243 560
- WO-A1-2010/030280
- WO-A1-2014/149737
- US-A- 4 322 935
- US-B1- 6 199 354

## Description

### Domaine technique

La présente invention concerne une tondeuse agraire pourvue d'un frein, et plus spécialement un frein de stationnement.
On entend par tondeuse agraire, une tondeuse à gazon ou une tondeuse débroussailleuse utilisable pour l'entretien d'espaces verts. Une telle tondeuse peut être destinée à un usage professionnel pour l'entretien d'espaces verts publics ou privés, ou à un usage domestique pour l'entretien des parcs et jardins. On entend par frein de stationnement, un frein susceptible d'être actionné pour Immobiliser la tondeuse lorsqu'elle n'est pas en utilisation. Le frein peut notamment servir à sécuriser la tondeuse stationnée en pente, ou pour l'immobiliser sur un véhicule lors de son transport.
L'invention trouve des applications pour des tondeuses à conducteur marchant, pour des tondeuses à conducteur porté, pour des tondeuses à conducteur distant ou encore pour des tondeuses autonomes.
Enfin, l'invention trouve des applications tant pour des tondeuses à moteur électrique que pour des tondeuses à moteur thermique.

### Etat de la technique antérieure

On connaît par le document WO2010/030280 une tondeuse à conducteur marchant pourvue d'un frein de stationnement avec un organe de frein agissant contre un pneumatique d'une roue de la tondeuse.

On connaît encore par le document WO2014/149737 une tondeuse à conducteur porté pourvue d'une pédale de frein de stationnement agissant sur un axe de rotation des roues arrière de la tondeuse.

### Exposé de l'invention

La présente invention a pour but de proposer une tondeuse avec un frein de stationnement simple et fiable.
Un autre but est de proposer un frein de stationnement économique ne nécessitant que très peu d'organes supplémentaires par rapport à une tondeuse dépourvue d'un tel frein.

Un autre but encore est de proposer une tondeuse avec un frein de stationnement à commande électrique ou manuelle permettant d'actionner le frein tout en sécurisant la tondeuse.

Pour atteindre ces buts, l'invention concerne plus précisément une tondeuse comprenant un châssis, des roues pour le déplacement de la tondeuse selon un plan de tonte, et un carter de coupe.
Conformément à l'invention la tondeuse est pourvue d'un frein de stationnement avec au moins un organe de frein solidaire du carter de coupe. Le carter de coupe est monté mobile sur le châssis entre au moins une position de tonte et une position d'immobilisation de la tondeuse dans laquelle l'organe de frein vient en contact avec au moins une roue de la tondeuse pour immobiliser ladite roue.

On entend par plan de tonte un plan parallèlement auquel la tondeuse peut évoluer lorsque toutes ses roues sont en contact avec le sol. Il s'agit également d'un plan selon lequel la tondeuse est susceptible de couper les végétaux lorsque toutes ses roues sont posées au sol. Le plan de tonte est un plan horizontal lorsque les roues de la tondeuse sont posées sur un sol horizontal et plan.

On considère que l'organe de frein immobilise la roue lorsqu'il interdit sa rotation par complémentarité de forme ou lorsqu'il exerce sur la roue une pression pour empêcher la tondeuse de se déplacer, notamment dans une pente, sous l'effet de son propre poids.

Plusieurs organes de frein peuvent être prévus sur le carter de coupe pour venir en contact avec plusieurs roues de la tondeuse. En particulier, la tondeuse peut être pourvue de deux roues arrière présentant un axe de rotation fixe par rapport au châssis, et le carter de coupe peut comprendre deux organes de frein associés respectivement aux deux roues arrière.
On entend par axe de rotation "fixe", l'axe de rotation d'une roue non-pivotante. Les roues avant peuvent être des roues pivotantes ou non pivotantes, On entend par roue pivotante une roue avec un axe de rotation sensiblement parallèle au plan de coupe et un axe de pivotement sensiblement perpendiculaire au plan de coupe, c'est-à-dire sensiblement vertical.

Selon d'autres possibilités de réalisation, les organes de frein peuvent également être associés à une ou plusieurs roues avant de la tondeuse.

Le ou les organes de frein sont configurés pour coopérer avec la roue, lorsque le carter de coupe est dans la position d'immobilisation, pour immobiliser la roue. La coopération entre l'organe de frein et la roue peut avoir lieu directement ou par l'intermédiaire d'un organe complémentaire solidaire en rotation de la roue. En particulier le ou les organes de frein peuvent être configurés pour coopérer avec l'un parmi une jante, un moyeu, un tambour solidaire de la jante ou du moyeu, et une bande de roulement de la roue. La bande de roulement peut être formée par un pneumatique équipant la roue.
L'organe de frein peut comporter, par exemple, un patin ou un ergot, susceptibles de venir en contact avec la roue.
L'organe de frein est de préférence un organe rigidement solidaire du carter de coupe.

Selon une possibilité de mise en œuvre de l'invention, le carter de coupe peut présenter une liberté de mouvement entre la position de tonte et la position d'immobilisation, avec une composante parallèle au plan de tonte.
En d'autres termes, le carter de coupe peut se déplacer, dans ce cas, d'avant en arrière par rapport au châssis entre la position de tonte, ou une parmi plusieurs positions de tonte, et la position d'immobilisation.

Lorsque le frein est configuré pour immobiliser les roues arrière, l'immobilisation s'opère dans ce cas par un déplacement du carter de coupe vers l'arrière.

Selon une autre possibilité de mise en œuvre de l'invention, non exclusive de la précédente, le carter de coupe peut aussi présenter une liberté de mouvement entre la position de tonte et la position d'immobilisation, avec une composante perpendiculaire au plan de tonte.
En d'autres termes, le carter de coupe peut se déplacer, dans ce cas, de haut en bas par rapport au châssis. Lorsque la tondeuse repose sur une surface horizontale, ceci correspond à une composante verticale du mouvement. Le mouvement de haut en bas permet accessoirement de régler une hauteur de coupe dans la ou les positions de tonte.
Toujours selon ce mode particulier de réalisation, la position d'immobilisation est de préférence une position haute au maximum de la course du carter de coupe par rapport au châssis et donc dans la position la plus proche du châssis, ou une position basse au maximum de la course et donc dans la position la plus éloignée du châssis.

Selon encore une autre possibilité de mise en œuvre de l'invention, le carter de coupe peut présenter une liberté de mouvement entre la position de tonte et la position d'immobilisation avec une composant parallèle au plan de tonte et une composante perpendiculaire au plan de tonte, les composantes parallèles et perpendiculaire étant liées.
En d'autres termes, le carter de coupe peut se déplacer, dans ce cas, de manière concomitante de haut en bas et d'avant en arrière.

Bien qu'il soit possible d'envisager une position d'immobilisation haute, la position d'immobilisation est de préférence une position basse du carter de coupe, c'est-à-dire une position plus basse que le position de tonte la plus basse. Une position d'immobilisation de la tondeuse avec un carter de coupe au bas de sa course par rapport au châssis, et donc proche du sol, présente un certain nombre d'avantages.
Elle permet d'abaisser le centre de gravité de la tondeuse en stationnement, et permet de réduire l'accès à la lame ou aux lames logées dans le carter de coupe.

La tondeuse peut avantageusement comporter l'un parmi une rampe et un parallélogramme de suspension du carter de coupe au châssis. Ces organes permettent un déplacement relatif du carter de coupe par rapport au châssis dans un mouvement comprenant des composantes parallèle et perpendiculaire au plan de coupe liées, de la manière décrite ci-dessus.

Pour actionner le déplacement du carter de coupe entre la position de tonte et la position d'immobilisation, et éventuellement entre des positions de tonte de hauteur différente, la tondeuse peut comporter un mécanisme de déplacement manuel du carter de coupe entre la position de tonte et la position d'immobilisation. Un même et unique levier peut être prévu pour ajuster à la fois la hauteur de coupe de la tondeuse, en sélectionnant une position de tonte, et pour actionner le frein de stationnement, en sélectionnant la position d'immobilisation.

Selon la configuration de la tondeuse, un bon maintien du contact entre l'organe de frein et la roue de la tondeuse dans la position d'immobilisation peut être garanti par le simple poids du carter de coupe ou par une complémentarité de forme entre l'organe de frein et la roue. Toutefois, et pour davantage de sécurité, la tondeuse peut encore être pourvue d'un verrou configuré pour verrouiller le carter de coupe dans la position d'immobilisation. Un tel verrou permet de garantir la qualité du contact entre l'organe de frein et la ou les roues de la tondeuse et éviter une libération intempestive du frein de stationnement

De manière avantageuse, le verrou peut être un verrou indexé configuré en outre pour verrouiller le carter de coupe dans plusieurs positions de tonte, et en particulier des positions de tonte correspondant à des hauteurs de coupe différentes de la tondeuse.

Pour faciliter le réglage d'une hauteur de coupe et l'actionnement du frein de stationnement, la tondeuse peut encore comporter un vérin configuré pour déplacer le carter de coupe entre une gamme continue de positions de tonte et la position d'immobilisation. Lorsque la tondeuse est une tondeuse électrique, le vérin est de préférence un vérin électrique. Pour des tondeuses plus importantes un vérin hydraulique est également envisageable.

La tondeuse de l'invention peut en effet être une tondeuse électrique. Elle peut comporter, dans ce cas, au moins un moteur électrique d'entraînement d'au moins une lame de coupe du carter de coupe.

La tondeuse peut encore comporter au moins un moteur électrique d'avancement de la tondeuse couplé aux roues arrière.

Les moteurs d'entraînement de lame et d'avancement de la tondeuse peuvent être alimentés notamment par une batterie d'accumulateurs électriques.

D'autres caractéristiques et avantages de l'invention ressortent de la description qui suit en référence aux figures des dessins. Cette description est donnée à titre illustratif et non limitatif.

### Brève description des figures

La figure 1 est une perspective d'une tondeuse conforme à l'invention, montrée dans une position de tonte, et comportant un mécanisme d'actionnement manuel d'un frein de stationnement.
La figure 2 est une perspective de la tondeuse de la figure 1 montrée en position d'immobilisation, la partie avant gauche de la tondeuse étant arrachée pour montrer un mécanisme d'actionnement d'un frein de stationnement et un verrou du frein de stationnement. La figure montre aussi un organe de frein.
La figure 3 est une perspective d'une tondeuse conforme à l'invention comportant un mécanisme d'actionnement électrique d'un frein de stationnement. A cet effet, et comme dans la figure 2, la partie avant gauche de la tondeuse est arrachée pour montrer ce mécanisme.

### Description détaillée de modes de mise en œuvre de l'invention

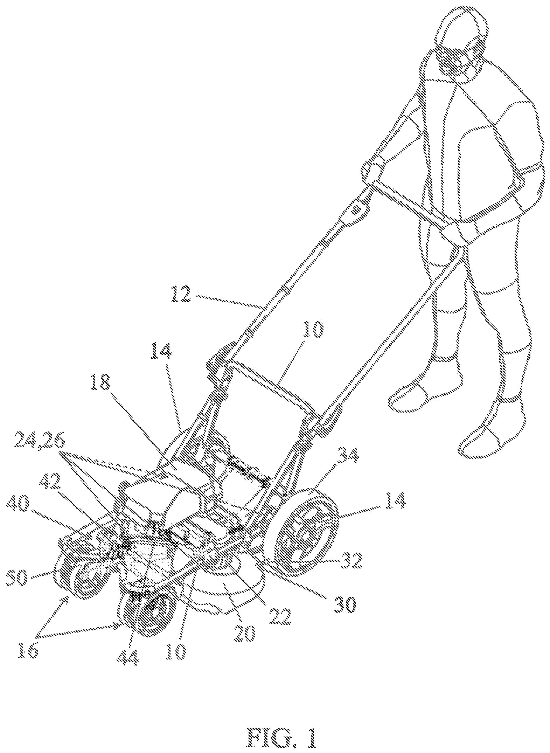

La figure 1 montre une tondeuse électrique, du type à conducteur marchant, dans une position de tonte. Elle comprend un châssis tubulaire 10 sur lequel sont montés différents organes de la tondeuse.
Parmi les organes montés sur le châssis 10, on peut noter en particulier un guidon repliable 12, des roues arrière 14 non-pivotantes, des roues avant 16 pivotantes, une batterie d'alimentation électrique 18 et un carter de coupe 20. Par simplification de la figure, d'autres accessoires de la tondeuse, tel qu'un bac de ramassage des reliefs de tonte, ne sont pas représentés.

Les termes "avant" et "arrière" sont considérés par rapport au sens de déplacement normal de la tondeuse en fonctionnement, un conducteur marchant de la tondeuse se déplaçant derrière la tondeuse.

Dans l'exemple Illustré, le châssis 10 est agencé de manière sensiblement parallèle au plan de tonte de la tondeuse, c'est-à-dire de manière sensiblement horizontale lorsque la tondeuse repose sur ses roues et sur un sol horizontal.
Les roues arrière 14 sont solidaires du châssis avec une liberté de rotation selon un axe également parallèle au plan de tonte. Il s'agit de roues motrices couplées à un moteur électrique non visible sur la figure 1. Les roues avant 16, agencées par paires, présentent une liberté de rotation selon un axe sensiblement parallèle au plan de tonte et une liberté de pivotement selon un axe sensiblement perpendiculaire au plan de tonte.

Le carter de coupe 20 est situé essentiellement sous le châssis 10 entre les roues avant 16 et les roues arrière 14. Il loge une ou plusieurs lames de coupe non visibles sur la figure. Ces lames sont entraînées par un moteur électrique 22 solidaire du carter de coupe.
Le carter de coupe 20 est monté sur le châssis 10 par l'intermédiaire d'un parallélogramme de suspension 24 formé, dans cet exemple, de quatre biellettes 26, trois d'entre elles étant visibles au moins partiellement sur les figures. Les biellettes 26 sont articulées à la fois sur le châssis 10 et sur le carter de coupe 20 et confèrent ainsi au carter de coupe 20 une mobilité par rapport au châssis 10. Le carter de coupe 20 peut être ainsi déplacé par rapport au châssis dans un mouvement qui comprend à la fois une composante perpendiculaire au plan de tonte, et une composante parallèle au plan de tonte.
Dans la suite de la description, et par simplification, le déplacement perpendiculaire au plan de tonte est désigné par déplacement vertical et le déplacement parallèle au plan de tonte est désigné par déplacement horizontal, en se référant à la tondeuse dont les roues sont posées sur un sol plan et horizontal.

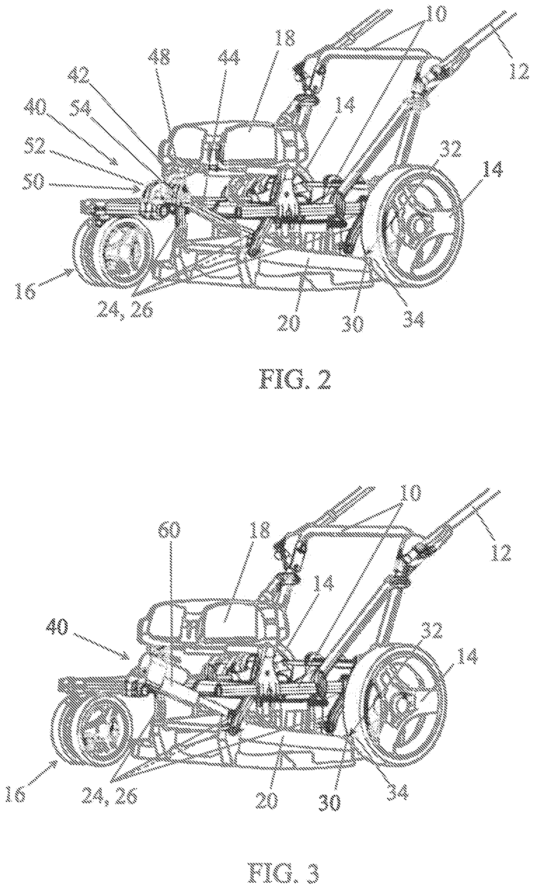

La composante de déplacement vertical du carter de coupe par rapport au châssis est mise à profit pour régler la hauteur de coupe de la tondeuse, en approchant plus ou moins le carter de coupe du sol.
Le déplacement vertical du carter de coupe peut être indexé ou non pour définir plusieurs positions de tonte. Cet aspect est décrit plus en détail dans la suite de la description, notamment en référence à la figure 2.

Le déplacement vertical du carter de coupe s'accompagne d'un pivotement des biellettes par rapport au châssis et donc d'un déplacement horizontal, lié au déplacement vertical.
Dans l'exemple de réalisation illustré, le point d'articulation de chaque biellette sur le châssis est situé à l'arriére du point d'articulation de la même biellette sur le carter de coupe.
Ainsi un abaissement du carter de coupe 20 par rapport au châssis 10, en direction du sol, s'accompagne d'un déplacement du carter de coupe 20 vers l'arrière, en se rapprochant des roues arrière 14.
Ce mouvement est mis à profit pour la réalisation du frein de stationnement
Le carter de coupe 20 comprend en effet des organes de frein 30 susceptibles de venir en prise avec les roues arrière 14 dans la position dite d'immobilisation. Un organe de frein unique ou un organe de frein pour chaque roue arrière peut être prévu. Son fonctionnement est visible sur les figures 2 et 3.

La figure 2 montre le carter de coupe dans la position d'immobilisation. Comme le montre la figure 2, le carter de coupe 20 s'étend devant les roues arrière 14 et présente un organe de frein 30. L'organe de frein 30 comprend une extrémité de contact 32, en contact avec la bande de roulement 34 d'une roue arrière 14. Il est positionné sur le carter de coupe à proximité de cette roue, pour qu'un léger déplacement du carter de coupe 20 vers l'arrière, autorisé par les biellettes 26, permette à l'extrémité de contact 32 de l'organe de frein 30 de venir en prise avec la bande de roulement 34 de la roue 14. Plus précisément dans l'exemple illustré, l'extrémité de contact 32 de l'organe de frein 30 vient s'engager dans un relief de la bande de roulement 34 ou en appui sur cette bande de roulement. L'extrémité de contact 32 peut aussi être formée par un patin susceptible de venir en prise avec la bande de roulement.
La position du carter de coupe dans laquelle l'organe de frein est appliqué contre la roue est la position d'immobilisation. Dans cette position l'organe de frein interdit ou pour le moins rend plus difficile la rotation de la roue contre laquelle il est en appui. L'organe de frein 30 et la partie de la roue avec laquelle il interagit dans la position d'immobilisation forment ainsi un frein de stationnement
Un organe de frein similaire, non visible sur la figure 2, peut être prévu pour l'autre roue arrière.

La figure 2 montre aussi un mécanisme de réglage 40 de la position du carter de coupe 20 par rapport au châssis.
Le mécanisme de réglage 40 comprend un levier de réglage 42 pivotant relié au carter de coupe 20 par l'intermédiaire d'une bielle 44 articulée sur le carter de coupe et sur le levier de réglage. Le levier de réglage 42 est actionnable manuellement pour changer de position de tonte ou pour engager ou libérer la position d'immobilisation.
Le mécanisme de réglage 40 comprend également un ergot de verrouillage, non représenté sur la figure, solidaire du levier de réglage 42 et associé à un peigne d'indexation 50. Le peigne d'Indexation 50 comprend une pluralité de positions indexées, sous la forme d'encoches 52, dans lesquelles l'ergot de verrouillage, chargé par un ressort de rappel non visible, peut venir s'engrener.
A chaque encoche 52 correspond une position relative du carter de coupe 20 par rapport au châssis 10, et une hauteur de coupe de la tondeuse.
Le peigne d'indexation 50 comprend également une encoche ou un arrêtoir 54 permettant de verrouiller le mécanisme de réglage, et par l'intermédiaire de ce mécanisme le carter de coupe, dans la position d'immobilisation dans laquelle le ou les organes de frein sont appliqués contre les roues.

L'ergot de verrouillage peut être libéré des encoches 52 ou de l'arrêtoir 54 par une action sur une poignée 48 du levier de réglage 42, à rencontre du ressort de rappel. Ceci permet de libérer le levier de réglage pour changer de position de tonte, enclencher la position d'immobilisation ou libérer la position d'immobilisation.

La figure 2 montre le levier de réglage 42 dans la position correspondant à la position d'immobilisation, l'ergot de verrouillage coopérant alors avec l'arrêtoir 54.

La figure 3 montre une autre possibilité de réalisation d'un mécanisme de réglage 40 dans laquelle le levier de réglage est remplacé par un vérin électrique 60. Le vérin électrique peut alors servir à la fois au déplacement du carter de coupe entre différentes positions de tonte et la position d'immobilisation et au verrouillage des différentes positions.
Lorsqu'un vérin est utilisé, les positions de tonte ne sont pas nécessairement Indexées, la hauteur du carter de coupe par rapport au châssis pouvant être réglée continument.

## Revendications

1. Tondeuse comprenant un châssis (10), des roues (14, 18) pour le déplacement de la tondeuse selon un plan de tonte, et un carter de coupe (20),
**caractérisée par** :
- un frein de stationnement avec au moins un organe de frein (30) solidaire du carter de coupe (20), et
- en ce que le carter de coupe (20) est monté mobile sur le châssis (10) entre au moins une position de tonte et une position d'immobilisation de la tondeuse dans laquelle l'organe de frein vient en contact avec au moins une roue (14) de la tondeuse pour Immobiliser ladite roue.

2. Tondeuse selon la revendication 1, avec deux roues arrière (14) présentant un axe de rotation fixe par rapport au châssis, dans laquelle le carter de coupe (20) comprend deux organes de frein (30) associés respectivement aux deux roues arrière (14).

3. Tondeuse selon la revendication 1 ou 2, dans lequel le carter de coupe (20) présente une liberté de mouvement entre la position de tonte et la position d'immobilisation, avec une composante parallèle au plan de tonte.

4. Tondeuse selon l'une quelconque des revendications 1 à 3 dans lequel le carter de coupe (20) présente une liberté de mouvement entre la position de tonte et la position d'Immobilisation, avec une composante perpendiculaire au plan de tonte.

5. Tondeuse selon l'une quelconque des revendications 1 ou 2, dans lequel le carter de coupe (20) présente une liberté de mouvement entre la position de tonte et la position d'immobilisation avec une composante parallèle au plan de tonte et une composante perpendiculaire au plan de tonte, les composantes parallèles et perpendiculaire étant liées.

6. Tondeuse selon l'une des revendications 4 et 5 dans lequel la position d'Immobilisation est une position basse du carter de coupe (20).

7. Tondeuse selon l'une des revendications 1 à 6, comprenant l'un parmi une rampe et un parallélogramme (24) de suspension du carter de coupe (20) au châssis (10).

8. Tondeuse selon l'une des revendications précédentes comprenant un mécanisme (40) de déplacement manuel du carter de coupe (20) entre la position de tonte et la position d'immobilisation.

9. Tondeuse selon l'une des revendications précédentes comprenant un verrou (50) configuré pour verrouiller le carter de coupe dans la position d'immobilisation.

10. Tondeuse selon la revendication 9, dans laquelle le verrou (50) est un verrou indexé configuré en outre pour verrouiller le carter de coupe (20) dans plusieurs positions de tonte.

11. Tondeuse selon l'une des revendications précédentes, comprenant un vérin (60) configuré pour déplacer le carter de coupe entre la position de tonte et la position d'immobilisation.

12. Tondeuse selon l'une des revendications précédentes dans laquelle l'organe de frein (30) comprend l'un parmi un patin et un ergot (32).

13. Tondeuse selon l'une des revendications précédentes dans laquelle l'organe de frein est configuré pour coopérer avec l'un parmi une jante, un moyeu, et une bande de roulement de la roue.

14. Tondeuse selon l'une des revendications précédentes comprenant un moteur électrique (22) d'entrainement d'au moins une lame de coupe du carter de coupe.

15. Tondeuse selon l'une quelconque des revendications 2 à 14, comprenant un moteur électrique d'avancement de la tondeuse couplé aux roues arrière.

## Patentansprüche

1. Mäher, umfassend ein Gestell (10), Räder (14, 16) zur Verschiebung des Mähers gemäß einer Scherebene und ein Schneidegehäuse (20),
**gekennzeichnet durch**:
- eine Feststellbremse mit zumindest einem Bremsorgan (30), das elnstücklg mit dem Schneidegehäuse (20) ist, und
- dass das Schneidegehäuse (20) beweglich auf dem Gestell (10) zwischen zumindest einer Scherposition und einer immobilisierungsposition des Mähers, In der das Bremsorgan in Kontakt mit zumindest einem Rad (14) des Mähers kommt, um das Rad zu immobilisieren, montiert ist.

2. Mäher nach Anspruch 1, mit zwei Hinterrädern (14), die eine feste Drehachse in Bezug auf das Gestell aufweisen, wobei das Schneidegehäuse (20) zwei Bremsorgane (30) umfasst, die jeweils mit zwei Hinterrädern (14) verbunden sind.

3. Mäher nach Anspruch 1 oder 2, wobei das Schneidegehäuse (20) eine Bewegungsfreiheit zwischen der Scherposition und der Immobilisierungsposition mit einer Komponente parallel zur Scherebene aufweist.

4. Mäher nach einem der Ansprüche 1 bis 3, wobei das Schneidegehäuse (20) eine Bewegungsfreiheit zwischen der Scherposition und der immobilisierungsposition mit einer Komponente senkrecht zur Scherebene aufweist.

5. Mäher nach einem der Ansprüche 1 oder 2, wobei das Schneidegehäuse (20) eine Bewegungsfreiheit zwischen der Scherposition und der Immobilisierungsposition mit einer Komponente parallel zur Scherebene und einer Komponente senkrecht zur Scherebene aufweist, wobei die parallele und die senkrechte Komponente verbunden sind.

6. Mäher nach einem der Ansprüche 4 und 5, wobei die immobilisierungsposition eine untere Position des Schneidegehäuses (20) ist.

7. Mäher nach einem der Ansprüche 1 bis 6, umfassend eines von einer Schräge und einer Parallelogrammaufhängung (24) des Schneidegehäuses (20) am Gestell (10).

8. Mäher nach einem der vorhergehenden Ansprüche, umfassend einen Mechanismus (40) zur manuellen Verschiebung des Schneidegehäuses (20) zwischen der Scherposition und der Immobilisierungsposition.

9. Mäher nach einem der vorhergehenden Ansprüche, umfassend eine Verriegelung (50), die konfiguriert Ist, um das Schneidegehäuse In der Immobilisierungsposition zu verriegeln.

10. Mäher nach Anspruch 9, wobei die Verriegelung (50) eine gekoppelte Verriegelung Ist, die ferner konfiguriert ist, um das Schneidegehäuse (20) In mehreren Scherpositionen zu verriegeln.

11. Mäher nach einem der vorhergehenden Ansprüche, umfassend einen Zylinder (60), der konfiguriert ist, um das Schneidegehäuse zwischen der Scherposition und der Immobilisierungsposition zu verschieben.

12. Mäher nach einem der vorhergehenden Ansprüche, wobei das Bremsorgan (30) eines von einer Bremsbacke und einem Rastnocken (32) umfaset.

13. Mäher nach einem der vorhergehenden Ansprüche, wobei das Bremsorgan konfiguriert ist, um mit einem von einer Felge, einer Radnabe und einer Lauffläche des Rads zu kooperieren.

14. Mäher nach einem der vorhergehenden Ansprüche, umfassend einen elektrischen Motor (22) zum Antreiben von zumindest einer Schneidklinge des Schneidegehäuses.

15. Mäher nach einem der Ansprüche 2 bis 14, umfassend einen elektrischen Motor zum Vortreiben des Mähers, der an die Hinterräder gekoppelt Ist.

## Claims

1. A mower comprising a chassis (10), wheels (14, 16) for displacement of the mower in a mowing plane and a cutting deck (20), **characterised by**:
- a parking brake with at least one brake member (30) fixed with respect to the cutting deck (20), and
- that the cutting deck (20) is mounted moveably on the chassis (10) between at least one mowing position and a position for immobilisation of the mower in which the brake member comes into contact with at least one wheel (14) of the mower for immobilising said wheel.

2. A mower according to claim 1 having two rear wheels (14) having an axis of rotation which is fixed with respect to the chassis, wherein the cutting deck (20) comprises two brake members (30) respectively associated with the two rear wheels (14).

3. A mower according to claim 1 or claim 2 wherein the cutting deck (20) has a freedom of movement between the mowing position and the immobilisation position with a component parallel to the mowing plane.

4. A mower according to any one of claims 1 to 3 wherein the cutting deck (20) has a freedom of movement between the mowing position and the immobilisation position with a component perpendicular to the mowing plane.

5. A mower according to any one of claims 1 and 2 wherein the cutting deck (20) has a freedom of movement between the mowing position and the immobilisation position with a component parallel to the mowing plane and a component perpendicular to the mowing plane, the parallel and perpendicular components being linked.

6. A mower according to one of claims 4 and 5 wherein the immobilisation position is a low position of the cutting deck (20).

7. A mower according to one of claims 1 to 6 comprising one of a ramp and a parallelogram (24) for suspending the cutting deck (20) to the chassis (10).

8. A mower according to one of the preceding claims comprising a mechanism (40) for manual displacement of the cutting deck (20) between the mowing position and the immobilisation position.

9. A mower according to one of the preceding claims comprising a lock (50) configured to lock the cutting deck in the immobilisation position

10. A mower according to claim 8 wherein the lock (50) is an indexed lock further configured to lock the cutting deck (20) in a plurality of mowing positions.

11. A mower according to one of the preceding claims comprising an actuator (60) configured to displace the cutting deck between the mowing position and the immobilisation position.

12. A mower according to one of the preceding claims wherein the brake member (30) comprises one of a shoe and a lug (32).

13. A mower according to one of the preceding claims wherein the brake member is configured to cooperate with one of a rim, a hub and a tread of the wheel.

14. A mower according to one of the preceding claims comprising an electric motor (22) for driving at least one cutting blade of the cutting deck.

15. A mower according to any one of claims 2 to 14 comprising an electric mower for advance movement of the mower, that is coupled to the rear wheels.
